# EUROPEAN PATENT APPLICATION

(11) **EP 3 569 433 A1**
(43) Date of publication of application: **20.11.2019**
(21) Application number: 19174337.6
(22) Date of filing: 14.05.2019
(51) Int. Cl.: B60J 9/04, B60P 1/44, B60Q 1/30

(54) **A METHOD OF PROVIDING A VEHICLE WITH A LIGHT SOURCE**

(30) Priority: 17.05.2018 NL 2020950
(71) Applicant: H.OPDAM MANAGEMENT B.V., 1075 BW Amsterdam (NL)
(72) Inventor: Opdam, Joannes Jozef Gerardus, 1075 BW Amsterdam (NL); Opdam, Thomas Theodorus Jozef, 1074 VB Amsterdam (NL); Biscaras, Raphaël, 44850 Ligne (FR)
(74) Representative: Altenburg, Bernardus Stephanus Franciscus

(57) **Abstract**

A method of providing a vehicle (100) with a light source (170), said vehicle (100) comprising a platform (160) located in front of an access opening (151) to a cargo space (150), which platform (160) is rotatable and moveable for loading/unloading.

To provide a vehicle (100) with a reduced safety risk, the vehicle (100) comprises a light-source (170) and an air curtain (180), wherein the light source (170) is located below the ceiling (140) and in or on at least one of i) an armature (171) between the two side walls (130) and rearwards of the air curtain (180), ii) the air curtain (180), and iii) a protection bar (190) for the air curtain (180).

## Description

The present invention relates to a method of providing a vehicle with a light source, said vehicle comprising
- wheels, said wheels defining a base plane for contact with a road, the vehicle having a front and a rear defining
   - a longitudinal direction parallel to said base plane, and
   - a transversal direction transverse to the longitudinal direction and parallel to said base plane;
- a floor, upright walls comprising two side walls extending in the longitudinal direction, and a ceiling defining a cargo space,
- an access opening to the cargo space,
- a platform located in front of the access opening, which platform
   - is rotatable about an axis parallel to the transversal direction between an upright first position and a second position substantially parallel to the base plane, and
   - in the second position is moveable transverse to the base plane;
said platform having a first side relatively close to the axis of rotation and a second side opposite of the first side; wherein the method comprises the step of providing a light source at the ceiling of the vehicle.

A vehicles, such as a truck or a trailer, are typically equipped with a moveable platform for loading or unloading cargo. When it is dark, e.g. at night, the platform is not visible very well, which is a safety risk. Light from a light source in the cargo space, typically located in the ceiling of the cargo space, helps to reduce this risk.

The object of the present invention is to provide a vehicle with a further reduced safety risk.

To this end, a method according to the preamble is characterized in that the vehicle comprises a light-source and an air curtain, wherein the light source is located
- below the ceiling, and
- in or on at least one of i) an armature between the two side walls and rearwards of the air curtain, ii) the air curtain, and iii) a protection bar for the air curtain;
said light source capable of illuminating the platform.

Thus while a vehicle according to the state of the art comprising a light source in the ceiling of the cargo space may suffer from a reduced amount of light if it is equipped with an air curtain, with the method according to the invention, less light is blocked and/or more light reaches the platform, enhancing safety, in particular during loading/unloading. In the present invention, the local reduction in height of the cargo space by the presence of an air curtain is exploited to improve the illumination of the platform.

The light source being capable of illuminating the platform means that at least part of the light will reach the platform in a horizontal position when in the second position at the same level as the floor. Typically the light source will be aimed at the platform.

The term "located below the ceiling" includes being mounted to the ceiling (e.g by screwing an armature for the light source to the sealing). In that case, the light source is (physically) between the two upright side walls.

If the armature is located downstream of the air curtain, then if the vehicle comprises a protection bar for the air curtain, the light source is preferably located between i) said air curtain, and ii) said protection bar for the air curtain.

According to a favourable embodiment, the vehicle is provided with an element chosen from i) the air curtain, and ii) the protection bar for the air curtain;
wherein the element comprises at least one of a) a socket for the light source, and b) a mounted light source.

Thus it is possible to install the light source with little or no further effort and/or time, which would detract from the time the truck can be used for commercial purposes.

According to a favourable embodiment, the light source is present inside the air curtain and with light from the light source capable of leaving the air curtain via an opening chosen from an air inlet and an air outlet.

Thus the light source is well protected and no further openings have to be created in the air curtain.

According to a favourable embodiment, the light source is mounted in channel of an array of channels in the outlet opening.

This allows for easy mounting of the light source in the air curtain. It also allows for easy orientation/alignment of the light source.

According to a favourable embodiment, the inside of the element has a reflectivity of >50%.

This allows for a high light yield. The air curtain may be of bare aluminum metal at the inside, which satisfies this condition easily at no further cost.

According to a favourable embodiment, the light source is electrically connected to the air curtain such that when the air curtain is powered to produce an air-curtain, light is emitted by the light source.

Thus safety is increased because less operations have to be performed. Turning on the air curtain will automatically turn on the light. If it is desired that this does not happen in broad daylight, a daylight sensor may be included.

An air-curtain is the flow of air produced by an air curtain.

According to a favourable embodiment, the air curtain is an air curtain comprising a sensor for detecting when the access opening is open.

Thus operation of the light is automatic.

According to a favourable embodiment, the light source is electrically coupled to at least one fan for generating the air-curtain.

Thus the light source serves a dual purpose. If it is out, which can be seen from the outside, the fan may need replacement.

The present invention will now be illustrated with reference to the drawing where
Fig. 1A to Fig. 1C show cross-sectional views through vehicles illustrating three main embodiments provided using the method according to the present invention; and
Fig. 2A and Fig. 2B show cross-sectional views through vehicles illustrating two alternative embodiments.

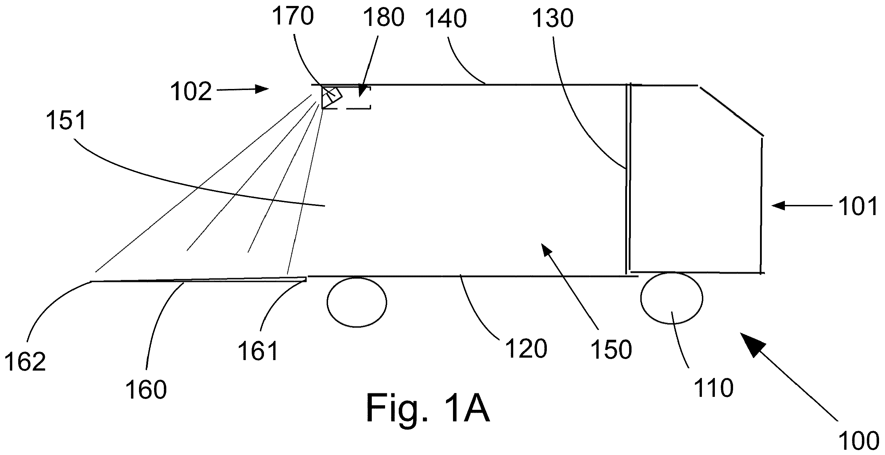

Fig. 1A to Fig. 1C show cross-sectional views through vehicles illustrating three embodiments of the present invention.
Fig. 1A shows a vehicle 100 comprising wheels 110, said wheels 110 defining a base plane for contact with a road. The vehicle 100 has a front end 101 and a rear end 102.

The vehicle 100 also comprises a floor 120, upright walls 130 and a ceiling 140 defining a cargo space 150.

The vehicle 100 comprises an access opening 151 to the cargo space 150, and a platform 160 located in front of the access opening 151, which platform 160 is rotatable about a axis upright first position (not shown) and a horizontal second position (shown). In the latter orientation the platform 160 is moveable transverse to the base plane (i.e. moveable up and down).

The platform 160 has a first side 161 relatively close to the axis of rotation and a second side 162 opposite of the first side 161.

A vehicle 100 as described above is generally known in the art.

Depending on the circumstances, e.g. at night, the upper surface of the platform may be sparsely illuminated, e.g. by light integrated in the ceiling 140 of the vehicle 100.

According to the method according to the present invention, the vehicle 100 is provided with a light-source 170. Also, the vehicle 100 comprises or is provided with an air curtain 180. The air curtain 180 comprises an air inlet 181 and an air outlet 182.

In the main embodiment of Fig. 1A, the light-source 170 is integrated in the air-curtain 180.

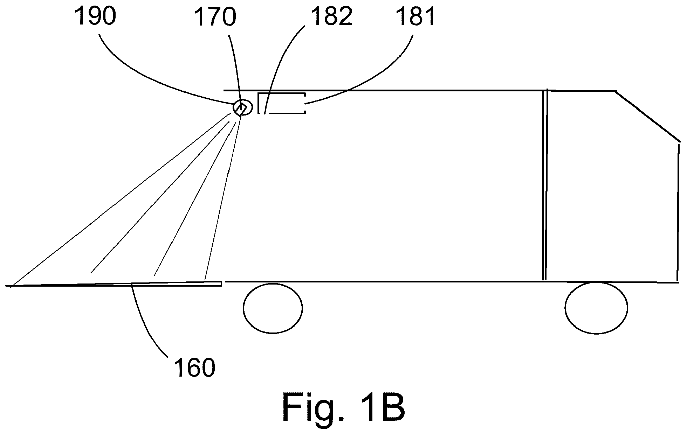

In the main embodiment of Fig. 1B, the light source 170 is located in a protection bar 190 for the air curtain 180. The protection bar 190 extends between the longitudinal side walls of the vehicle 100, and when mounting the protection bar 190 can be rotated about its longitudinal axis to aim the light source 170 at the platform 160.

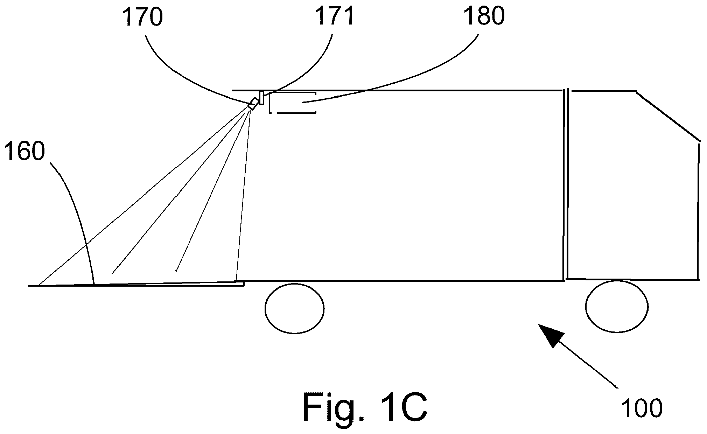

In the main embodiment of Fig. 1C an armature 171 is mounted against the ceiling 140 rearwards of the air curtain 180.

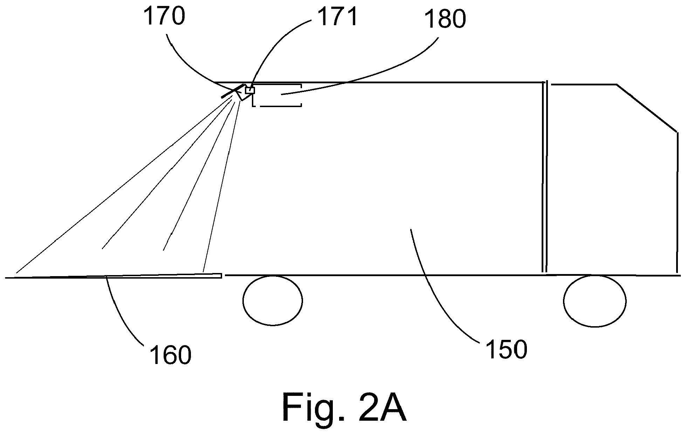

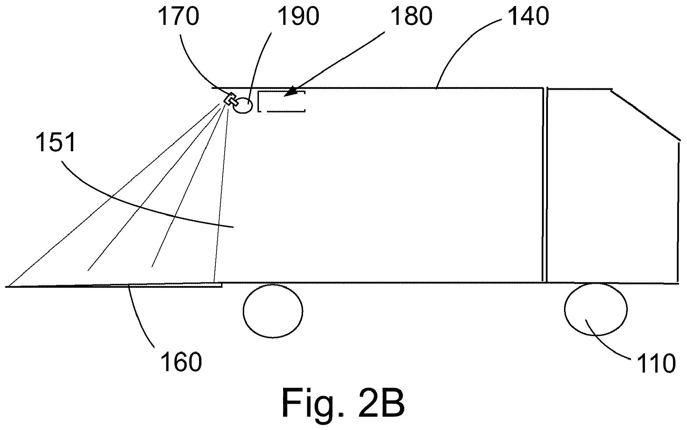

Fig. 2A and Fig. 2B show cross-sectional views through vehicles illustrating two alternative embodiments of the present invention.

## Claims

1. A method of providing a vehicle (100) with a light source (170), said vehicle (100) comprising
- wheels (110), said wheels (110) defining a base plane for contact with a road, the vehicle (100) having a front and a rear defining
- a longitudinal direction parallel to said base plane, and
- a transversal direction transverse to the longitudinal direction and parallel to said base plane;
- a floor (120), upright walls (130) comprising two side walls extending in the longitudinal direction, and a ceiling (140) defining a cargo space (150),
- an access opening (151) to the cargo space (150),
- a platform (160) located in front of the access opening (151), which platform (160)
- is rotatable about an axis parallel to the transversal direction between an upright first position and a second position substantially parallel to the base plane, and
- in the second position is moveable transverse to the base plane;
said platform (160) having a first side (161) relatively close to the axis of rotation and a second side (162) opposite of the first side (161) ;
wherein the method comprises the step of providing a light source (170) at the ceiling (140) of the vehicle (100);
**characterized in that** the vehicle (100) comprises a light-source (170) and an air curtain (180), wherein the light source (170) is located
- below the ceiling, and
- in or on at least one of i) an armature (171) between the two side walls and rearwards of the air curtain (180), ii) the air curtain (180), and iii) a protection bar (190) for the air curtain (180);
said light source (170) capable of illuminating the platform (160).

2. The method according to claim 1, wherein the vehicle (100) is provided with an element chosen from i) the air curtain (180), and ii) the protection bar (190) for the air curtain (180);
wherein the element comprises at least one of a) a socket for the light source (170), and b) a mounted light source (170).

3. The method according to claim 2, wherein the light source (170) is present inside the air curtain (180) and with light from the light source (170) capable of leaving the air curtain (180) via an opening (151) chosen from an air inlet (181) and an air outlet (182).

4. The method according to claim 3, wherein the light source (170) is mounted in channel of an array of channels in the outlet (182) opening (151) .

5. The method according to any of the claims 2 to 4, wherein the inside of the element has a reflectivity of >50%.

6. The method according to any of the preceding claims, wherein the light source (170) is electrically connected to the air curtain (180) such that when the air curtain (180) is powered to produce an air-curtain (180), light is emitted by the light source (170).

7. The method according to claim 6, wherein the air curtain (180) is an air curtain (180) comprising a sensor for detecting when the access opening (151) is open.

8. The method according to any of the preceding claims, wherein the light source (170) is electrically coupled to at least one fan for generating the air-curtain (180).
